# EUROPÄISCHE PATENTSCHRIFT

(11) **EP 2 995 919 B1**
(45) Veröffentlichungstag und Bekanntmachung des Hinweises auf die Patenterteilung: **12.04.2017**
(21) Anmeldenummer: 15002142.6
(22) Anmeldetag: 18.07.2015
(51) Int. Cl.: G01L 5/24, G01L 5/00, B60B 29/00, B25B 27/00, B25B 21/00, B25B 23/14, F16B 39/00

(54) **SICHERHEITSVORRICHTUNG FÜR EINE ACHSWELLE MIT ZENTRALMUTTER UND VERFAHREN ZUR KONTROLLE DES ANZUGS DER ZENTRALMUTTER**
SAFETY DEVICE FOR A HOLLOW AXLE SHAFT WITH CENTRAL NUT AND METHOD TO CONTROL THE CENTRAL NUT TIGHTENING
DISPOSITIF DE SÉCURITÉ POUR UN ARBRE D'ESSIEU CREUX AVEC UN ÉCROUT CENTRAL ET PROCÉDÉ POUR LE CONTROLE DE SERRAGE DE L'ÉCROUT CENTRAL

(30) Priorität: 31.07.2014 DE 102014110838
(43) Veröffentlichungstag der Anmeldung: 16.03.2016
(73) Patentinhaber: Capital Technology Beteiligungs GmbH, 8600 Bruck an der Mur (AT)
(72) Erfinder: Seidel, Stefan, 8010 Graz (AT); Brandl, Christoph, 8101 Gratkorn (AT)
(74) Vertreter: Kovac, Werner

(56) Entgegenhaltungen:
- DE-B3- 10 251 361
- US-A- 4 151 655

## Beschreibung

### Gegenstand

Die Erfindung betrifft eine hohle Achswelle für die Aufnahme einer Felge des Rades eines Wettbewerbsfahrzeuges, welche Achswelle an ihrem fahrzeugäußeren Ende ein Außengewinde hat, auf dem eine Zentralmutter mittels einer fahrzeugexternen Schraubvorrichtung auf- und abschraubbar ist, und die Felge zwischen einer Schulter der Achswelle und der Zentralmutter eingespannt ist.

Derartige Radbefestigungen werden in Wettbewerbsfahrzeugen eingesetzt, deren Räder bei einem Boxenstop in minimaler Zeit zu wechseln sind, was wettbewerbsentscheidend sein kann. Dazu werden Schraubvorrichtungen an die Zentralmutter angesetzt, die die Zentralmutter sehr schnell lösen und nach dem Radwechsel ebenso schnell wieder anziehen. Dabei ist es wichtig, dass die Zentralmutter fest genug angezogen ist. Sonst besteht die Gefahr, dass das Rad sich während der weiteren Fahrt löst, mit Unfällen oder Ausscheiden als Folge.

### Stand der Technik

Es ist in der Praxis üblich und bekannt, das von der Schraubvorrichtung auf die Zentralmutter ausgeübte Anzugsmoment (Drehmoment) zu messen und an der Schraubvorrichtung anzuzeigen. Es hat sich aber gezeigt, dass eine Messung des Anzugsmomentes sehr unzuverlässig ist, weil es von der stark variierenden Reibung abhängt, von toleranzbedingten Maßabweichungen, von Fremdteilchen und von sonstigen Verkantungen (wie weiter unten ausgeführt) verfälscht wird. Um auf der sicheren Seite zu sein, müssen diese Messfehler berücksichtigt werden, was die Zeitdauer des Anziehens der Zentralmutter - und damit die Dauer des Boxenstops - verlängert.

Aus der US 2009/0207008A1 ist es bekannt, die Zugkraft in den einzelnen Radbolzen der Radbefestigung eines Alltagsfahrzeuges während der Fahrt zu messen, um das Lösen einer Radmutter während der Fahrt zu melden. Dazu wird die Messgröße über Funk zu einer an Bord befindlichen Überwachungsstation mit Anzeigevorrichtung übertragen.

Aus der FR 2 914 062 ist es zwar bekannt, zur Messung der Einspannkraft die Dehnung einer Schraube zu messen. Dies dient jedoch der experimentellen Ermittlung des erforderlichen Anzugsmoments, wozu eine Musterschraube in Längsrichtung durchbohrt und mit einer eigenen Vorrichtung ausgestattet ist.

Andere Messvorrichtungen sind aus den DE 102 51 361 und US 4 151 655 bekannt.

### Problem/Lösung

Es ist somit die der Erfindung zugrunde liegende Aufgabe, eine gattungsgemäße Vorrichtung und auch ein Verfahren vorzuschlagen, die das oben angeführte wettbewerbstypische Problem lösen: Sie sollen sicherstellen, dass eine Zentralmutter beim Boxenstop in minimaler Zeit auf eine festgelegte Einspannkraft angezogen wird, und dass die Schraubvorrichtung möglichst sofort nach Erreichen dieser Einspannkraft, aber keinesfalls zu früh, abgezogen wird. Das setzt eine unverfälschte Messung in Echtzeit voraus und erfordert weitere erfindungsgemäße Maßnahmen.

Erfindungsgemäß wird das mit den weiteren kennzeichnenden Merkmalen des 1. Anspruchs erreicht. Wesentlich ist die Messung der von der Zentralmutter auf die Felge ausgeübten Einspannkraft an der Achswelle. Nur diese entspricht unmittelbar und unverfälscht der auf die Felge ausgeübten Wirkung und gewährleistet eine sichere Befestigung des Rades in kürzester Zeit.

Die Anbringung des Sensors beziehungsweise mehrerer am Umfang verteilter Sensoren an der Achswelle bedeutet Authentizität der Messung, weil diese an dem die Einspannkraft ausübenden Element selbst vorgenommen wird. Besonders günstig ist die Anbringung im Inneren der hohlen Achswelle, weil die Sensoren dort vor mechanischer Beschädigung geschützt sind.

Die Anbringung der Sicherheitseinheit im fahrzeugäußeren Ende der Achswelle bietet den Vorteil, dass sie leicht montierbar, auf kürzestem Weg mit den Sensoren verbindbar, geschützt und trotzdem gut zugänglich ist. Sie behindert das Abnehmen des Rades nicht, kann dabei nicht beschädigt werden und ihre nach außen wirkende Ausgabevorrichtung ist in geringster Entfernung von dem das Rad wechselnden Bedienungsmann. Die Hohle Achswelle bietet auch genügend Raum für deren Unterbringung. Die Ausgabe erfolgt unverzögert und direkt an den Bedienungsmann.

Die Ausbildung der Ausgabeeinheit als Funksender stellt die drahtlose Verbindung zu einer Anzeige im Gesichtsfeld des Bedienungsmannes her; eine an der Sicherheitseinheit selbst erscheinende visuelle Anzeige wäre wegen der angesetzten Schraubvorrichtung nicht erkennbar, eine akustische wegen des Motorengeräusches nicht hörbar. Die Anbringung der Sendeantenne an der fahrzeugäußeren Seite der Sicherheitseinheit gewährleistet ein Minimum an Schwächung des gesendeten Signals.

In weiterer Ausbildung ist dann ein Empfänger für das vom Funksender gesendete Signal in/an der Schraubvorrichtung vorgesehen, vorzugsweise an deren (nicht rotierendem) Gehäuse, welcher Empfänger das während des Anziehens der Zentralmutter in Echtzeit empfangene Signal empfängt und in visuelle Leuchtsignale übersetzt. Diese erscheinen dann beispielsweise im Blickfeld des Bedienungsmannes, worauf dieser die Schraubvorrichtung ohne Zeitverlust abziehen kann. Dann erfolgt die Freigabe zur Weiterfahrt. Es ist ein weiterer Vorteil der Funkverbindung, dass das Signal auch von einer anderen Stelle oder von mehreren Empfängern aufgenommen werden kann. Der externe Empfänger kann auch nur außerhalb der Achswelle, beispielsweise im Fahrzeug selbst angeordnet sein.

Vorzugsweise ist die Sicherheitseinheit ein in das fahrzeugäußere Ende der hohlen Achswelle eingesteckter und abnehmbar fixierter Grundkörper, der eine mit dem mindestens einen Sensor zusammenwirkende Elektronik, den Sender mit Antenne und eine Stromversorgungseinheit enthält. So ist die Vorrichtung als kompakte Einheit leicht handhabbar und einbaubar, ohne zusätzlichen Bauraum zu beanspruchen.

Für die Messung der von der Zentralmutter ausgeübten Einspannkraft können verschiedene Messmethoden angewandt werden. Eine gut geeignete Methode ist die Messung mittels Dehnungsmessstreifen. Dieser beziehungsweise diese können an der Außenseite der Achswelle angebracht sein, vorzugsweise sind sie aber an der deren Innenseite zwischen der Zentralmutter und einer Schulter der Achswelle angebracht. So wird die durch den Anzug der Zentralmutter verursachte Längsdehnung der Achswelle gemessen. Anbringung an der Innenseite erleichtert die Verbindung mit der Elektronik und ungefähr in der Mitte zwischen der Zentralmutter und der Schulter bedeutet Messung an der Stelle, an der ein annähernd gleichmäßiger Spannungszustand herrscht. Wenn zwei oder drei Dehnungsmessstreifen, vorzugsweise Dehnungsmessstreifen - Vollbrücken, am Umfang verteilt sind und die Messwerte gemittelt werden, wird die Wirkung von Temperaturunterschieden und überlagerter Biegemomente kompensiert und man erhält ein sehr genaues und unverfälschtes Messergebnis. Die von den Dehnungsmessstreifen erfühlte mechanische Dehnung wird in der Elektronik in eine elektrische Spannung übersetzt.

Alternativ, zum Beispiel wenn die Innenkontur der Achswelle es nicht erlaubt, kann als Sensor mindestens ein Piezosensor, etwa in Form einer Piezofolie, an der der Felge zugekehrten Schultern des Flansches der Achswelle angebracht sein. Damit wird der von der Zentralmutter erzeugte Anpressdruck zwischen der Felge und der Schulter der Achswelle gemessen.

Um elektrische Energie zu sparen, ist es nützlich, die Sicherheitsvorrichtung erst einzuschalten, wenn sie gebraucht wird. Dazu kann die Sicherheitsvorrichtung einen zusätzlichen Sensor zur Messung der Zentrifugalbeschleunigung und die Elektronik einen Modul zur Berechnung der Drehzahl enthalten.

Die erfindungsgemäße Problemlösung umfasst auch ein Verfahren zum Betrieb einer Sicherheitsvorrichtung gemäß einem der vorgehenden Ansprüche beim Radwechsel eines Wettbewerbsfahrzeuges während eines Boxenstops. Es besteht in den Schritten a) bis e) des Anspruchs 9. Die Vorteile der direkten Messung der Einspannkraft sind weiter oben erwähnt.

Die als Funksender ausgebildete Ausgabeeinheit ermöglicht die Ausgabe des Signals in Echtzeit, auch wenn die Schraubvorrichtung die Sicherheitsvorrichtung verdeckt. Der an der Schraubvorrichtung angebrachte Empfänger beziehungsweise dessen Empfangsantenne kann in der Nähe der Sendeantenne angeordnet sein. Daher braucht das Funksignal nicht stark (und die Stromversorgungseinheit in der Sicherheitsvorrichtung nicht groß) zu sein.

Der Empfänger übersetzt das empfangene der Einspannkraft entsprechende Signal in entsprechende vorzugsweise visuelle Signale auf einer Anzeigevorrichtung im Gesichtfeld des Bedienungsmannes. Diese Signale zeigen dem Bedienungsmann an, dass die erforderliche Einspannkraft erreicht wurde, gegebenenfalls mit einem Ankündigungssignal vor dem eigentlichen Freigabesignal. Dem können mehrere oder verschiedenfarbige Leuchtmittel dienen.

In einer vorteilhaften Ausgestaltung des Verfahrens ist das der Einspannkraft entsprechende Signal ein Spannungssignal und in der Elektronik werden vorgegebenen Signalwerten entsprechend einzelne oder mehrere Leuchtmittel eingeschaltet. Diese Leuchtmittel sind vorzugsweise Leuchtdioden.

Die erfindungsgemäße Sicherheitseinheit wird nur während des Radwechsels benötigt. Es spart Strom, sie erst kurz vorher einzuschalten. Für selbsttätiges Einschalten gibt es erfindungsgemäß besondere geeignete Kriterien, die einzeln oder in Kombination zur Anwendung kommen können. Vorzugsweise wird eingeschaltet, wenn ein Sensor meldet, dass eine externe Schraubvorrichtung an die Zentralmutter angesetzt ist. Ein zusätzliches Kriterium ist, dass die Einspannkraft der Felge zuerst unter einen bestimmten Wert sinkt - nämlich beim Lösen der Zentralmutter zwecks Abnehmen des alten Rades - und dann beim Anziehen des neuen Rades wieder ansteigt beziehungsweise anzusteigen beginnt. Das kann auch in einem Stand-by Modus ständig geprüft werden.

In einer besonders raffinierten Weiterbildung wird die erfindungsgemäße Sicherheitsvorrichtung eingeschaltet, wenn die Raddrehzahl während eines definierten Zeitintervalls auf die der erlaubten Geschwindigkeit in der Boxenstraße entsprechende Drehzahlabgesenkt wird. Das kann auf Grund der festgestellten Drehzahl der Achswelle oder durch Einschalten des Tempomaten zur Begrenzung der Boxenstraßengeschwindigkeit geschehen. Auf diese Weise erkennt die Elektronik, dass das Fahrzeug langsamer wird, also in die Boxenstraße eingebogen ist.

### Figuren

Im Folgenden wird die Erfindung anhand von Abbildungen beschrieben und erläutert. Es stellen dar:
- Fig. 1:: Eine erfindungsgemäß ausgebildete Sicherheitsvorrichtung mit angesetzter Schraubvorrichtung,
- Fig. 2:: Eine Variante der Fig. 1.
- Fig. 3:: Ein Diagramm zur Beziehung zwischen Anzugsmoment, Einspannkraft und Zeit.

### Beschreibung

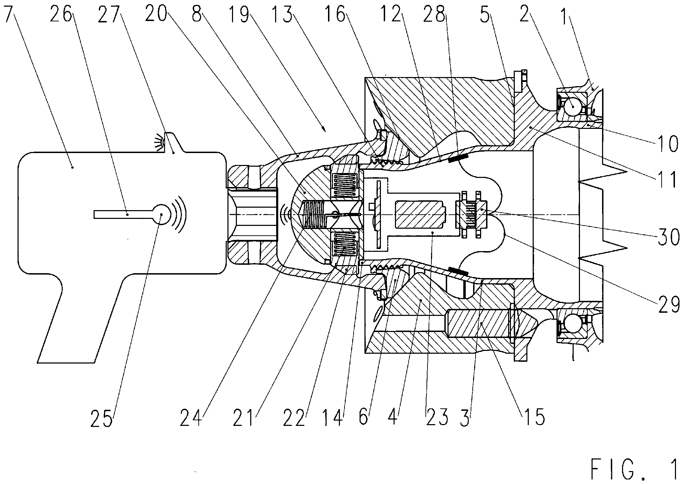

In **Fig. 1** ist vom Achsträger 1 eines Wettbewerbsfahrzeuges nur ein Teil mit einem der Radlager 2 zu sehen. In diesem ist eine Hohle Achswelle 3 gelagert, sie ist die Achswelle. Auf dieser sitzt die Felge 4 eines im Übrigen nicht dargestellten Rades. Die Felge 4 ist zwischen einer Schulter 5 und einer Zentralmutter 6 auf der Hohle Achswelle 3 eingespannt. Die Zentralmutter 6 ist mittels einer fahrzeugexternen Schraubvorrichtung 7 lösbar und anziehbar. Dazu wird sie von einem Bedienungsmann an der Zentralmutter 6 angesetzt, wobei ihr glockenförmiger Schraubkopf 8 formschlüssig in nicht dargestellte Vertiefungen der Zentralmutter 6 eingreift.

Die hohle Achswelle 3 bildet einen hier zylindrischen Abschnitt 10 für die Radlager 2, einen Flansch 11 mit der Schulter 5 für die Anlage der Felge 4, einen leicht konischen Teil 12, einen Gewindeabschnitt 13 zum Zusammenwirken mit der Zentralmutter 6 und einen Kragenabschnitt 14. Eine Anzahl Mitnehmerbolzen 15 sichert die Drehmomentübertragung auf die Felge 4. Die Zentralmutter 6 bildet an ihrer der Felge 4 zugewandten Seite eine konische Fläche 16, die mit einer entsprechenden Fläche der Felge 4 zusammenwirkt und dabei eine Einspannkraft auf die Felge 4 ausübt und diese zentriert.

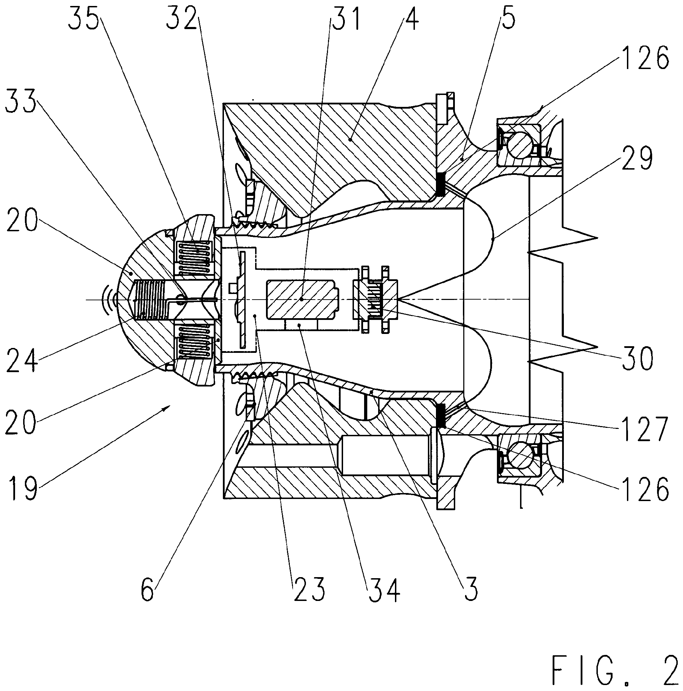

Ein wesentlicher Teil der erfindungsgemäßen Sicherheitsvorrichtung ist eine Sicherheitseinheit 19, deren Grundkörper 20 im Kragenabschnitt 14 der hohlen Achswelle 3, in ihrem fahrzeugäußeren Ende, steckt. Der Grundkörper 20 ist mit der hohlen Achswelle 3 mechanisch verbunden. Dazu hat er eine Querbohrung 21, in der in Öffnungen der hohlen Achswelle eingreifende Schnappriegel 22 zur Sicherung der Zentralmutter 6 seiner Positionierung in radialer Richtung federbelastet geführt sind. Der Grundkörper 20 umfasst eine Elektronikeinheit 23, deren Inhalt anhand der Fig. 2 beschrieben wird, und eine Sendeantenne 24. Diese strahlt ein Signal aus, das hier von einer Empfangsantenne 25 in der Schraubvorrichtung empfangen und in einer Empfangselektronik 26 in Signale für eine Ausgabevorrichtung 27 übersetzt wird. Die Empfangsantenne könnte auch anderswo, beispielsweise am die Schraubvorrichtung 7 speisenden Druckluftschlauch, oder sogar am Fahrzeug angebracht sein.

Im konischen Teil 12 der Achswelle 3 ist an deren Innenseite mindestens ein Dehnungsmessstreifen 28 beziehungsweise eine Dehnungsmessstreifenbrücke befestigt. Vorzugsweise sind es zwei Dehnungsmessstreifen - Vollbrücken, um Biegeeinflüsse und Temperatureinflüsse zu kompensieren. Dieser beziehungsweise diese sind über 29 und eine Steckverbindung 30 an die Elektronikeinheit 23 angeschlossen.

**Fig. 2** zeigt eine Variante der Fig. 1, anhand derer auch weitere Details der Sicherheitseinheit 19 beschrieben werden. Die Variante unterscheidet sich nur dadurch von der Ausführungsform der Fig.1, dass anstelle der Dehnungsmessstreifen Piezosensoren 126, hier piezosensible Folien vorgesehen sind. Diese messen den Anpressdruck der Felge 4 auf die Schulter 5, was ebenso eine unmittelbare Messung der Einspannkraft ist. Die auf Druck ansprechenden Piezosensoren 126 sind, über den Umfang verteilt, an der der Felge 4 zugewandten Seite des Flansches 11 der Hohle Achswelle 3 angeordnet. Sie sind über Leitungen 128, die durch eine Querbohrung 127 führen, mit der Elektronikeinheit 23 verbunden.

Die Elektronikeinheit 23 ist an der Sicherheitseinheit 19 befestigt und mit dieser aus der hohlen Achswelle 3 ausziehbar. Dazu bilden die Leitungen 29 Schlaufen und sind über eine Steckverbindung 30 mit der Elektronikeinheit 23 verbunden. Die Elektronikeinheit 23 enthält eine die Sensorsignale bearbeitende Schaltung, gegebenenfalls einen Signalverstärker und einen Sender 32, der mit einer Sendeantenne 24 in Verbindung steht, sowie eine Stromquelle 31. Schaltung, Verstärker und Sender 32 sind auf einer Platine untergebracht und daher auf der Zeichnung nicht unterscheidbar. Eine Leitung 33 stellt die Verbindung zur Sendeantenne 24 her, welche im vordersten Teil der Sicherheitseinheit untergebracht ist, um ihre Signale möglichst ungehindert senden zu können. Gefördert wird das noch durch Auswahl eines geeigneten Werkstoffes des Grundkörpers 20, etwa eines Leichtmetalls oder eines Kunststoffes.

Zusätzlich kann die Sicherheitseinheit 19 einen weiteren Sensor 34 zur Messung der Zentrifugalbeschleunigung und die Elektronikeinheit 23 einen Modul zur Berechnung der Drehzahl enthalten.

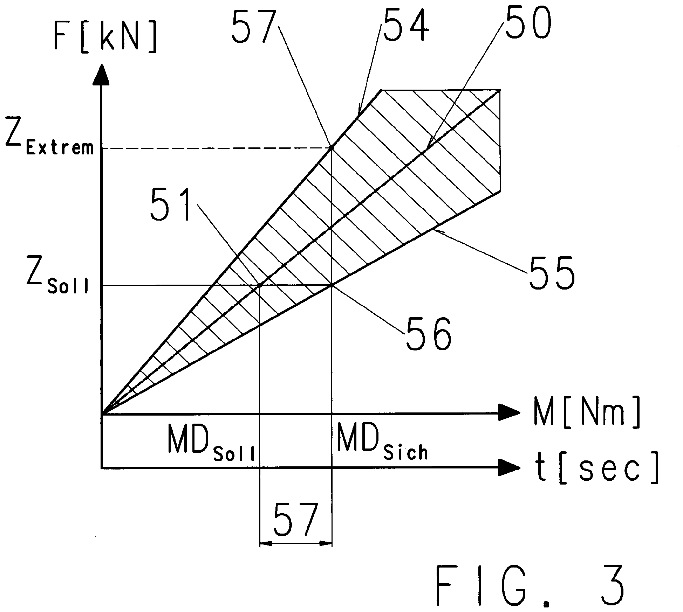

Anhand der Fig. 3 wird erläutert, warum die Messung der Einspannkraft im Vergleich mit der Messung des Anzugsmomentes der Zentralmutter einen wesentlich genaueren und daher im Rennbetrieb entscheidend schnelleren Anzug der Zentralmutter gewährleistet.

In **Fig. 3** ist auf der Ordinate die Einspannkraft Z in kN (Kilonewton) und auf der Abszisse das Anzugsmoment MD der Zentralmutter in Nm (Newtonmeter) aufgetragen. Theoretisch sollten diese in einer festen Beziehung stehen, die durch die gerade Linie 50 angedeutet ist. Um eine bestimmte Einspannkraft (Zₛₒₗₗ auf der Ordinate) zu erreichen müsste entsprechend dem Punkt 51 auf der Geraden 50, die Zentralmutter 6 mit einem Drehmoment MDₛₒₗₗ angezogen werden. Weil aber in der Praxis die Beziehung zwischen Einspannkraft und Anzugsmoment wegen Toleranzen, Reibung und Verunreinigung stark streut, ist die Gerade 50 durch ein von den Geraden 54,55 aufgespanntes Feld zu ersetzen (schraffiert). Zur Sicherheit muss daher bis zu einem dem Punkt 56 entsprechenden Anzugsmoment MD_{sicher} angezogen werden.

Weil die Schraubvorrichtung 7 das Anzugsmoment kontinuierlich steigert, dauert das sichere Anziehen der Zentralmutter um entscheidende Zehntelsekunden länger, was durch eine als zusätzliche Abszisse eingezeichnete Zeitachse t (sec) abbildbar ist. Wenn hingegen dank der Messung der Anzugskraft diese direkt eingestellt wird, so ist die Zentralmutter schneller angezogen und es wird die auf der Zeitachse mit 57 bezeichnete Zeit eingespart. Angenommen, bei Messung des Anzugsmomentes seien die Reibungs- und Toleranzverhältnisse besonders günstig und die Zuordnung entspricht der Geraden 54. Wenn die Zentralmutter 6 dann mit dem Anzugsmoment MD_{sicher} angezogen wird, wird über den Schnittpunkt 57 eine viel zu große Anzugskraft Zₑₓₜᵣₑₘ erreicht, die die Zentralmutter oder die Felge beschädigen kann.

Eine besondere Unsicherheit bei der Messung des Anzugsdrehmomentes entsteht, wenn sich beim Ansetzen der Zentralmutter auf das Gewinde 13 der hohlen Achswelle 3 die Gewindeanfänge der Achswelle 3 und der Zentralmutter 6 ineinander verkeilen. Die Ausläufe der Gewindegänge, entsprechend der Verschneidung zweier Schraubflächen (das sind die Gewindeflanken) mit einer achsnormalen Ebene oder einem koaxialen Kegel (das sind die Anfänge der Gewinde), bilden so an beiden Gewinden in Umfangsrichtung ansteigende Flächen und Kanten. Diese steigen beispielsweise an der Achswelle 3 im Uhrzeigersinn und an der Zentralmutter 6 im entgegengesetzten Sinn an. Wenn beide beim Ansetzen der Zentralmutter aufeinander treffen, verkeilen sie sich ineinander und das Drehmoment steigt stark an. Das avisiert dem Bedienungsmann, dass die Zentralmutter richtig angezogen ist, wo sie doch tatsächlich noch nicht einmal mit dem Einschrauben begonnen hat. Er zieht die Schraubvorrichtung 7 ab und meldet die Freigabe. Das hat zur Folge, dass das Fahrzeug nach dem Radwechsel noch in der Boxenstraße das Rad verliert, was auch immer wieder passiert. Ein Verkeilen der beiden Gewinde kann auch geschehen, wenn die Zentralmutter etwas schief angesetzt wird.

Das Verfahren zum Betrieb einer erfindungsgemäßen Sicherheitsvorrichtung beim Radwechsel eines Wettbewerbsfahrzeuges während eines Boxenstops gewährleistet ein absolut sicheres und genaues Anziehen der Zentralmutter in kürzester Zeit, was wettbewerbsentscheidend sein kann.

Die Sicherheitseinheit 19 kann während des ganzen Wettbewerbes eingeschaltet sein. Um Strom zu sparen, kann sie aber nur zum Radwechsel eingeschaltet werden. Das Einschalten kann durch einen nicht dargestellten Berührungssensor erfolgen, der anspricht, sobald die Schraubvorrichtung 7 an die Zentralmutter 6 angesetzt wird, oder sobald die Einspannkraft unter einen bestimmten Wert sinkt, oder sobald die Raddrehzahl während eines definierten Zeitintervalls auf die der Boxenstraßengeschwindigkeit entsprechende abgesenkt ist. Das kann durch Messung der Raddrehzahl geschehen, oder sobald der Fahrer bei Einfahrt in die Boxenstraße den Geschwindigkeitsbegrenzer aktiviert.

Wenn das neue Rad auf die Welle aufgesetzt ist, wird zum Anziehen der Zentralmutter 6 eine fahrzeugexterne Schraubvorrichtung 7 mit der am Schraubkopf 8 angesetzten Zentralmutter 6 vom Bedienungsmann angesetzt und gestartet. Während des Anziehens wird die von der Zentralmutter 6 auf die Felge 4 ausgeübte Einspannkraft in Echtzeit gemessen und das dieser entsprechende Signal von einem an der hohlen Achswelle 3 befestigten Sender 32 gesendet. Ein an der Schraubvorrichtung 7 angebrachter Empfänger 26 empfängt das der Einspannkraft entsprechende Signal. Dieses Signal ist ein elektrisches Spannungssignal, und entspricht einer mechanischen Zugspannung oder einem Anpressdruck der Felge 4 auf die Schulter 5 der hohlen Achswelle 3.

Dieses Signal wird in der dargestellten Ausführungsform von dem an beziehungsweise in der Schraubvorrichtung 7 angebrachten Empfänger 26 empfangen, der der Größe des Signals entsprechend eine oder mehrere, oder in verschiedenen Farben leuchtende Leuchtmittel, vorzugsweise Leuchtdioden, einschaltet. Wenn das einem vorgegebenen Wert der Einspannkraft entsprechende visuelle Signal 27, das sich im Gesichtsfeld des Bedienungsmannes befindet, aufleuchtet, kann er die Schraubvorrichtung sofort abziehen.

Bei einem Boxenstop werden meist alle vier Räder gleichzeitig ausgewechselt, es sind also vier Schraubvorrichtungen 7 gleichzeitig in Betrieb, und ein übergeordneter Mechaniker erteilt die Freigabe zur Fortsetzung der Fahrt. Auch das muss möglichst sofort erfolgen, wenn an allen vier Radachsen die erforderliche Anzugskraft erreicht ist und die Schraubvorrichtungen 7 abgezogen sind. Es liegt im Rahmen der Erfindung, dass auch dieser übergeordnete Mechaniker die Funksignale empfängt. Sobald er die dem Erreichen der erforderlichen Anzugskraft aller vier Räder entsprechenden Mitteilungen erhält, kann er sofort die Freigabe erteilen. Das bringt weiteren Zeitgewinn.

## Patentansprüche

1. Sicherheitsvorrichtung für eine hohle Achswelle (3) zur Aufnahme der Felge (4) des Rades eines Wettbewerbsfahrzeuges, welche Achswelle an ihrer fahrzeugäußeren Seite ein Außengewinde (13) hat, auf dem eine Zentralmutter (6) mittels einer fahrzeugexternen Schraubvorrichtung (7) auf- und abschraubbar ist, wobei die Felge (4) zwischen einer Schulter (5) der Achswelle (3) und der Zentralmutter (6) eingespannt ist, **dadurch gekennzeichnet, dass**
a) mindestens ein Sensor (28; 126) zur Messung der auf die Felge (4) ausgeübten Einspannkraft an der Achswelle (3) angebracht ist,
b) in dem fahrzeugäußeren Ende der Achswelle (3) eine Sicherheitseinheit (19) angebracht ist, welche über eine Signalleitung (29) mit dem mindestens einen Sensor (28; 126) verbunden ist,
c) diese Sicherheitseinheit (19) eine Ausgabeeinheit (23,24) für das vom Sensor beziehungsweise dem mindestens einen Sensor (28; 126) abgegebene der Einspannkraft entsprechende Signal enthält, und
d) die Ausgabeeinheit ein Funksender (32) mit einer Sendeantenne (24) zur Funkverbindung mit einem externen Empfänger (26) ist, welche Sendeantenne (24) an der fahrzeugäußeren Seite der Sicherheitseinheit (19) angeordnet ist.

2. Sicherheitsvorrichtung nach Anspruch 1, **dadurch gekennzeichnet, dass** der Empfänger (26) in/an der Schraubvorrichtung angebracht ist, welcher Empfänger (26) das während des Anziehens der Zentralmutter (6) in Echtzeit **gesendete** Signal empfängt und in Signale für eine Anzeigevorrichtung (27) übersetzt.

3. Sicherheitsvorrichtung nach Anspruch 1, **dadurch gekennzeichnet, dass** die Sicherheitseinheit (19) ein in das fahrzeugäußere Ende der Hohle Achswelle (3) eingesteckter und abnehmbar fixierter Grundkörper (20) ist, der eine mit dem mindestens einen Sensor (28; 126) zusammenwirkende Elektronikeinheit (23), den Sender (32) mit der Sendeantenne (24) und eine Stromversorgungseinheit (31) enthält.

4. Sicherheitsvorrichtung nach Anspruch 1, **dadurch gekennzeichnet, dass** als Sensor mindestens ein Dehnungsmessstreifen (28) an der Innenseite der Achswelle (3) zwischen der Zentralmutter (6) und einer Schulter (11) der Achswelle (3) angebracht ist.

5. Sicherheitsvorrichtung nach Anspruch 1, **dadurch gekennzeichnet, dass** als Sensor mindestens ein auf Druck ansprechender Piezosensor (126) an der der Felge (4) zugekehrten Seite der Schulter (11) der Achswelle (3) angebracht ist.

6. Sicherheitsvorrichtung nach Anspruch 3, **dadurch gekennzeichnet, dass** ein weiterer Sensor (35) am Grundkörper (20) der Sicherheitseinheit (19) so angebracht ist, der bei Ansetzen der Schraubvorrichtung (7) anspricht.

7. Sicherheitsvorrichtung nach Anspruch 1, **dadurch gekennzeichnet, dass** die Sicherheitseinheit (19) einen Sensor (34) zur Messung der Zentripetalkraft und die Elektronikeinheit (23) einen Modul zur Berechnung der Drehzahl der Achswelle (3) enthält.

8. Sicherheitsvorrichtung nach Anspruch 1, **dadurch gekennzeichnet, dass** die Sendeantenne (24) im vordersten Teil der Sicherheitseinheit (19) in geringer Entfernung von der Empfangsantenne (25) untergebracht ist.

9. Sicherheitsvorrichtung nach Anspruch 1, **dadurch gekennzeichnet, dass** die Sicherheitseinheit (19) einen zusätzlichen Sensor (34) zur Messung der Zentrifugalbeschleunigung und die Elektronikeinheit (23) einen Modul zur Berechnung der Drehzahl enthalten.

10. Verfahren zum Betrieb einer Sicherheitsvorrichtung gemäß einem der vorgehenden Ansprüche beim Radwechsel eines Wettbewerbsfahrzeuges während eines Boxenstops, **dadurch gekennzeichnet, dass** das Verfahren aus den aufeinander folgenden Schritten besteht:
a) zum Anziehen der Zentralmutter (6) wird eine fahrzeugexterne Schraubvorrichtung (7) an der Zentralmutter (6) angesetzt und diese (7) vom Bedienungsmann gestartet,
b) während des Anziehens wird die von der Zentralmutter (6) auf die Felge (4) ausgeübte Einspannkraft in Echtzeit gemessen und das dieser entsprechende Signal von einem an der hohlen Achswelle (3) befestigten Sender (32) gesendet,
c) ein an der Schraubvorrichtung (7) angebrachter Empfänger (26) empfängt das der Einspannkraft entsprechende Signal,
d) dieses Signal löst je nach seiner Größe mindestens ein visuelles und/oder akustisches Signal (27) im Gesichtsfeld eines Bedienungsmannes aus,
e) wenn das einem vorgegebenen Wert der Einspannkraft entsprechende Signal (27) erscheint, wird die die Schraubvorrichtung (7) abgezogen und die Freigabe gemeldet.

11. Verfahren nach Anspruch 10, **dadurch gekennzeichnet, dass** das der Einspannkraft entsprechende Signal ein Spannungssignal ist und in Schritt d) vorgegebenen Spannungswerten entsprechend einzelne verschiedene oder mehrere gleiche Leuchtmittel (27) eingeschaltet werden.

12. Verfahren nach Anspruch 10. **dadurch gekennzeichnet, dass** die Sicherheitseinheit (19) eingeschaltet wird, sobald ein weiterer Sensor (35) meldet, dass die externe Schraubvorrichtung (7) an die Zentralmutter (6) angesetzt ist.

13. Verfahren nach Anspruch 10, **dadurch gekennzeichnet, dass** die Sicherheitseinheit (19) eingeschaltet wird, wenn die Einspannkraft unter einen bestimmten Wert sinkt und nachher wieder ansteigt.

14. Verfahren nach Anspruch 10, **dadurch gekennzeichnet, dass** die Sicherheitseinheit (19) eingeschaltet wird, wenn die Raddrehzahl auf die der Boxenstraßengeschwindigkeit entsprechende abgesenkt ist.

## Claims

1. Safety device for a hollow axle shaft (3) which receives the rim (4) of the wheel of a competition vehicle, which axle shaft (3) has an external thread (13) on its distal side, a central nut (6) being screwable and unscrewable by means of a screwing appliance (7), the rim (4) being clamped between a shoulder (5) of the axle shaft (3) and the central nut (6), wherein
a) At least one sensor (28; 126) is disposed on the axle shaft (3) for measuring the clamping force acting on the rim (4),
b) A safety unit (19) is attached to the distal end of the axle shaft (3), to which safety unit (19) is connected the at least one sensor (28; 126) by means of a signal line (29),
c) This safety unit (19) comprises an output device (23,24) for the signal corresponding tot he clamping force, furnished by the at least one sensor (28; 126), and
d) The output device (23,24) is a wireless transmitter (32) comprising a transmitting antenna (24) for communication with an external receiver (26), the transmitting antenna (24) being located at the distal side of the safety unit (19).

2. Safety device according to claim 1, wherein the receiver (26) is fitted to the screwing appliance (7), which receiver (26) receives the signal generated during tightening the central nut (6) in real time and translates these in signals for a display device (27).

3. Safety device according to claim 1, wherein the safety unit (19) is a carrier body (20) inserted in the distal end of the hollow axle shaft (3) and removably fixed therein, which body (20) contains an electronic unit (23) linked to the at least one sensor (28; 126), the transmitter (32) with the transmitting antenna (24) and a power supply device (31).

4. Safety device according to claim 1, wherein as a sensor at least one wire strain gauge (28) is fitted to the inside of the axle shaft (3) between the central nut (6) and the shoulder (11) of the axle shaft (3).

5. Safety device according to claim 1, wherein as a sensor at least one piezo - electric pressure gage (126) is fixed to the shoulder (11) of the axle shaft (3) on the side facing the rim (4).

6. Safety device according to claim 3, wherein a further sensor (35) is fixed to the body (20) of the safety unit (19), so as to respond to application of the screwing appliance (7).

7. Safety device according to claim 1, wherein the safety unit (19) comprises a sensor (34) for measuring the centrifugal force, and the electronic unit (23) includes a module for calculating the rotating speed of the axle shaft (3).

8. Safety device according to claim 1, wherein the transmitting antenna (24) is located in the front part of the safety unit (19) only a small distance away from the receiver antenna (25).

9. Safety device according to claim 1, wherein the safety unit (19) comprises an additional sensor (34) for measuring the centrifugal force, and the electronic unit (23) includes a module for calculating the rotating speed of the axle shaft (3).

10. Process for operating a safety device according to one of the preceding claims during a stop of a competition vehicle at the box for changing wheels, wherein the process comprises the following steps:
a) For tightening the central nut (6), an external screwing appliance (7) is applied to the central nut (6) and started by the operator,
b) During tightening, the clamping force exerted by the central nut (6) on the rim (4) is measured in real time and the corresponding signal emitted by a wireless transmitter (32) fixed to the hollow axle shaft (3),
c) A receiver (26) fixed to the screwing appliance (7) receives the signal corresponding to the tightening force,
d) This signal triggers, depending on its magnitude, at least one visual or accoustic signal (27) in the range of perception of the operator,
e) When the signal corresponding to a predetermined magnitude of the clamping force appears, the screwing appliance (7) is withdrawn and clearance reported.

11. Process according to claim 10, wherein the signal corresponding to the clamping force is a signal of electric voltage and wherein in step d) according to predetermined values of voltage, one or more identical or different lighting means (27) are switched on.

12. Process according to claim 10, wherein the safety unit (19) is switched on, when a further sensor (35) reports, that the external screwing appliance (7) is in contact with the central nut (6).

13. Process according to claim 10, wherein the safety unit (19) is switched on, when the clamping force falls below a predetermined value and thereafter rises again.

14. Process according to claim 10, wherein the safety unit (19) is switched on when the rorating speed oft he wheels is reduced to the speed corresponding to the speed in the box lane.

## Revendications

1. Dispositif de sécurité pour un arbre creux (3) destiné à la réception d'une jante (4) de la roue d'une voiture de compétition, l'arbre (3) étant pourvu d'un filetage extérieur (13), sur lequel un écrou central (6) est vissable et dévissable moyennant un dispositif de vissage (7), la jante (4) étant serrée entre un épaulement (5) de l'arbre (3) et l'écrou central (6), **caractérisé en ce que**
a) Au moins un capteur (28; 126) appliqué à l'arbre (3) et destiné à la mésure de la force de serrage exercée sur la jante (4),
b) Une unité de sécurité (19) étant montée dans l'extrémité extérieure de l'arbre (3), laquelle unité est reliée à l'au moins un capteur (28; 126) moyennant une conduite de signal (29),
c) Cette unité de sécurité (19) comprenant une unité de sortie (23,24) du signal correspondant à la force de serrage, provenant du capteur ou d'au moins un capteur, respectivement,
d) L'unité de sortie (23,24) est un émetteur radioélectrique (32) avec une antenne (24) destiné à la communication sans fil avec un récepteur externe (26), l'antenne (24) étant disposée au coté extérieur de l'unité de sécurité (19).

2. Dispositif de sécurité selon la revendication 1, **caractérisé en ce que** le récepteur externe (26) est monté sur le dispositif de vissage (7), le récepteur (26) recevant le signal généré pendant le serrage de l'écrou central (6) en temps réel et le traduisant dans un signal pour une unité d'affichage (27).

3. Dispositif de sécurité selon la revendication 1, **caractérisé en ce que** l'unité de sécurité (19) est un corps de base (20) inséré dans le coté distale de l'arbre creux (3) et attaché de façon amovible, le corps de base (20) comportant une unité électronique (23) coopérant avec au moins un capteur (28; 126), l'émetteur (32) avec l'antenne (24), et un groupe d'alimentation de courant (31).

4. Dispositif de sécurité selon la revendication 1, **caractérisé en ce que** en tant que capteur au moins un extensomètre à fil (28) est appliqué dans l'intérieur de l'arbre (3) entre l'écrou central (6) et l'épaule (11) de l'arbre (3).

5. Dispositif de sécurité selon la revendication 1, **caractérisé en ce que** en tant que capteur au moins un capteur piézomètre (126) est appliqué, au coté en face de la jante (4), sur l'épaule (11) de l'arbre (3).

6. Dispositif de sécurité selon la revendication 1, **caractérisé en ce que** un capteur additionel (35) est appliqué au corps de base (20), de façon à répondre lorsque le dispositif de vissage (7) est mis en place.

7. Dispositif de sécurité selon la revendication 1, **caractérisé en ce que** l'unité de sécurité (19) comporte un capteur (34) destiné à mésurer la force centripetale, et l'unité électronique (23) contient un module de calcul de la vitesse rotative de l'arbre (3).

8. Dispositif de sécurité selon la revendication 1, **caractérisé en ce que** l'antenne émétrice (24) est logée dans la partie extérieure de l'unité de sécurité (19) à courte distance de l'antenne receptrice (25).

9. Dispositif de sécurité selon la revendication 1, **caractérisé en ce que** l'unité de sécurité (19) comporte un capteur additionel destiné à mésurer l'accelération centripetale et l'unité électronique (23) contient un module de calcul de la vitesse rotative de l'arbre (3).

10. Procédé d'opérer un dispositif de sécurité selon une des revendications précédentes pendant le changement de roue d'un véhicule de competition au cours de son arrêt de box, **caractérisé en ce que** le procédé comprend les pas suivants:
a) Pour serrer l'écrou central (6), un dispositif de serrage (7) externe du véhicule est appliqué à l'ecrou central (6) et le dispositif de serrage (7) est démarrée par l'opérateur,
b) Pendant le serrage, la force de serrage exercée par l'écrou central (6) sur la jante (4) est mésurée en temps réal et le signal correspondant à celle-ci est émis par un poste émetteur (32) attaché à l'arbre creux (3),
c) Un récepteur (26) attaché au dispositif de serrage (7) reçoit le signal correspondant à la force de serrage,
d) Ce signal, selon sa magnitude, déclenche au moins un signal visuel ou accoustique (27) dans le champs de perception de l'opérateur,
e) Lorsque le signal (27) correspondant à une valeur prédéterminée apparait, le dispositif de serrage (7) est retiré et le déblocage est signalé.

11. Procédé selon la revendication 10, **caractérisé en ce que** le signal correspondant à la force de serrage est un signal de tension éléctrique et **en ce que** dans le pas d) des moyens lumineux (2) différents ou identiques sont allumés, correspondant à des valeurs de tension prédéterminés.

12. Procédé selon la revendication 10, **caractérisé en ce que** l'unité de sécurité (19) est mis en circuit lorsque un capteur additionel (35) signale que le dispositif de serrage extérieur (7) est appliqué sur l'é crou central (6),

13. Procédé selon la revendication 10, **caractérisé en ce que** l'unité de sécurité (19) est mis en circuit lorsque la force de serrage tombe sous une valeur prédéterminé et ensuite monte de nouveau.

14. Procédé selon la revendication 10, **caractérisé en ce que** l'unité de sécurité (19) est mis en circuit lorsque la vitesse rotative de la roue est réduite à celle dans la voie vers la box.
